Europäisches Patentamt

European Patent Office

Office européen des brevets

(19)

(11) **EP 0 998 166 A1**

(12) **DEMANDE DE BREVET EUROPEEN**

(43) Date de publication:
**03.05.2000 Bulletin 2000/18**

(51) Int. Cl.⁷: **H04R 3/00**

(21) Numéro de dépôt: **99203486.8**

(22) Date de dépôt: **22.10.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **30.10.1998 FR 9813700**

(71) Demandeur:
**Koninklijke Philips Electronics N.V.**
**5621 BA Eindhoven (NL)**

(72) Inventeur: **Miet, Gilles**
**75008 Paris (FR)**

(74) Mandataire: **Chaffraix, Jean**
**Société Civile S.P.I.D.**
**156, Boulevard Haussmann**
**75008 Paris (FR)**

(54) **Dispositif de traitement audio récepteur et procédé pour filtrer un signal utile et le restituer en présence de bruit ambiant**

(57) L'invention s'applique à de nombreux appareils audio et notamment aux téléphones mobiles de voiture pour augmenter le confort acoustique de l'utilisateur en milieu bruyant. Un mode de réalisation particulièrement avantageux est proposé dans le cas d'une utilisation de type《mains libres》. L'invention consiste en un dispositif de traitement audio du signal pour modifier l'enveloppe spectrale d'un signal audio en fonction du bruit ambiant.

Application: réception audio, téléphonie.

FIG.1

Printed by Xerox (UK) Business Services
2.16.7 (HRS)/3.6

## Description

L'invention concerne un dispositif de traitement audio et un récepteur pour recevoir et filtrer un signal, dit signal utile, ayant une enveloppe spectrale située dans la bande audio, et à le restituer en présence de bruit ambiant.

Elle concerne également un appareil téléphonique comportant un tel récepteur.

L'invention concerne enfin un procédé de filtrage ainsi qu'un procédé de réception pour recevoir un signal utile, ayant une enveloppe spectrale située dans la bande audio, pour modifier l'enveloppe spectrale du signal utile avant de le restituer en présence de bruit ambiant.

Elle a de nombreuses applications dans les appareils électroniques audio susceptibles d'être utilisés dans un environnement bruyant. L'invention s'applique notamment aux équipements de radiotéléphonie mobile susceptibles d'être utilisés en voiture et permet de réduire les désagréments acoustiques liés au bruit du moteur et éventuellement de l'autoradio.

Le brevet américain publié sous le numéro 4 052 720 décrit un système de contrôle dynamique de bruit ambiant pour distribuer un bruit ambiant aléatoire dans un lieu de travail muni de capteurs d'environnement et pour ajuster le spectre et l'amplitude du bruit ambiant distribué, en fonction de la valeur de certains paramètres d'environnement mesurés à des intervalles de temps prédéterminés, par les différents capteurs.

Ce système est destiné à produire un effet positif sur des utilisateurs sur leur lieu de travail notamment pour augmenter leur productivité ou réduire l'effet d'interférence entre les différentes conversations. Il présente l'inconvénient principal d'augmenter le niveau sonore du bruit ambiant global ce qui, sur une longue période, peut générer une fatigue spécifique chez les utilisateurs.

L'invention a pour but de fournir un dispositif de traitement audio, un récepteur radio ainsi qu'un procédé de filtrage et un procédé de réception pour améliorer le confort acoustique de l'utilisateur dans un environnement bruyant, même en cas d'utilisation intensive et / ou prolongée.

Pour cela, l'invention prévoit un dispositif de traitement audio du genre mentionné dans le paragraphe introductif, remarquable en ce qu'il comporte des moyens de prélèvement du bruit ambiant, des moyens d'extraction d'enveloppe spectrale pour extraire des paramètres d'enveloppe du bruit ambiant prélevé et des moyens de filtrage numériques contrôlés par lesdits paramètres d'enveloppe pour modifier l'enveloppe spectrale du signal utile à restituer, lesdits moyens de filtrage comportant un filtre numérique à coefficients paramétrables et coopérant avec lesdits moyens d'extraction d'enveloppe pour paramétrer le filtre à l'aide des paramètres d'enveloppe.

Selon une caractéristique de l'invention, il est prévu un dispositif tel que déjà mentionné, remarquable en ce qu'il comporte une boucle d'annulation d'écho contrôlée par le signal de sortie du filtre numérique pour supprimer l'écho acoustique existant dans le bruit ambiant prélevé et pour fournir auxdits moyens d'extraction une estimation du bruit ambiant.

De même, l'invention prévoit un procédé de filtrage tel que mentionné dans le paragraphe introductif, remarquable en ce qu'il comprend les étapes suivantes:

- une étape d'acquisition et d'analyse spectrale pour prélever le bruit ambiant, en extraire une estimation d'enveloppe spectrale et en déduire des paramètres d'enveloppe,
- une étape de calcul de moyenne temporelle entre les paramètres d'enveloppe pour obtenir des paramètres moyennés, dits paramètres de contrôle,
- une étape de paramétrage pour paramétrer un filtre numérique à l'aide desdits paramètres de contrôle et
- une étape de filtrage du signal utile à l'aide dudit filtre numérique.

La description suivante, faite en regard des dessins ci-annexés, le tout donné à titre d'exemple non limitatif fera bien comprendre comment l'invention peut être réalisée.

La figure 1 est un schéma montrant un exemple de dispositif de traitement audio selon l'invention.
La figure 2 illustre un mode de réalisation préféré d'un dispositif selon l'invention.
La figure 3 est un schéma d'un exemple de récepteur selon l'invention.
La figure 4 est un organigramme pour illustrer un procédé de réception selon l'invention.

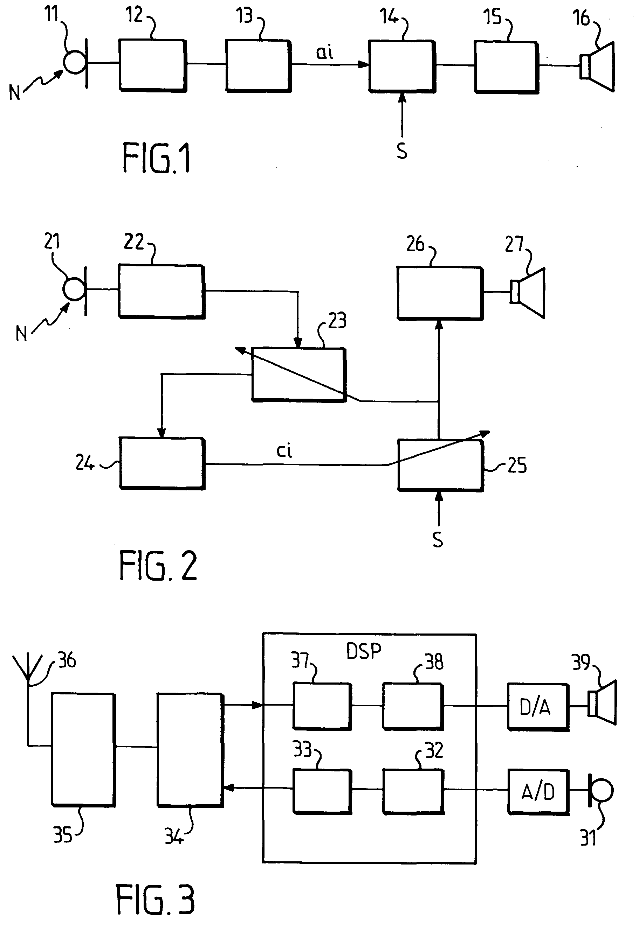

L'exemple de dispositif représenté à la figure 1 peut s'intégrer dans tout appareil électronique audio susceptible d'être utilisé dans un environnement bruyant et notamment dans un équipement de radiotéléphonie mobile de type 〈〈 mains libres 〉〉 utilisable en voiture. Il permet de réduire les désagréments acoustiques liés au bruit du moteur et éventuellement de l'autoradio si celui-ci fonctionne pendant une communication téléphonique.

Dans un exemple d'application de l'invention, le signal utile est un signal téléphonique numérique obtenu en sortie d'un codeur / décodeur de parole d'une chaîne de réception numérique classique. Selon un autre exemple d'application, le signal utile peut être prélevé directement en sortie d'un équipement audio, par exemple un autoradio. Le premier exemple correspond à une situation courante où une communication radio téléphonique est reçue dans un environnement bruyant, notamment dans un lieu public ou dans une voiture personnelle. Il s'agit dans ce cas de réduire la gêne acoustique due au bruit du moteur et de l'autoradio. Le second exemple s'applique à un utilisateur, notamment un automobiliste, écoutant simplement la radio ou de la musique enregistrée diffusée par un équipement audio (disque laser, cassette, autoradio etc.), dans sa voiture. Il s'agit alors de réduire l'effet de masquage spectral sélectif généré par l'influence du bruit du moteur, principalement, sur le signal audio émis par l'appareil audio.

Un bruit ambiant ayant un certain spectre de fréquences et une certaine amplitude, produit un double effet de masquage sur un signal de fréquences audio. Le premier effet, appelé masquage global, dû à un rapport d'amplitude trop faible entre le signal utile et le signal de bruit, peut être compensé par exemple en augmentant le volume sonore du signal utile. Cela est néanmoins fatiguant en utilisation prolongée. Le deuxième effet, appelé masquage spectral sélectif, dû à la composition spectrale du bruit ambiant, provoque une altération sélective du spectre du signal utile. Cet effet est très dommageable car il modifie la perception acoustique du signal utile en le dénaturant.

Le dispositif de la figure 1 permet de remédier à ces deux effets de masquage en modifiant sélectivement l'enveloppe spectrale du signal utile en fonction de celle du signal de bruit. Il comprend un microphone 11 pour capturer le bruit ambiant noté N, un bloc d'acquisition et de conversion 12 pour transformer le signal de bruit analogique reçu par le microphone 11 en un signal de bruit numérique correspondant au bruit ambiant. Ce signal de bruit numérique est traité par un bloc d'analyse spectrale 13 pour extraire l'enveloppe spectrale du signal et en déduire ses paramètres d'enveloppe, notés $a_i$. Un bloc de filtrage 14, contrôlé par le bloc d'analyse spectrale 13, reçoit en entrée un signal audio noté S, (le signal utile) pour lui appliquer un filtre numérique dont les coefficients varient en fonction des valeurs des paramètres d'enveloppe $a_i$ fournies par le bloc d'analyse spectrale. Le signal de sortie du filtre est alors converti en un signal analogique et amplifié par un bloc de conversion et d'amplification 15, avant d'être envoyé en sortie vers un haut-parleur 16.

Dans le premier exemple d'application, le bruit ambiant N capturé par le microphone 11 est constitué par le bruit du moteur ajouté au bruit de l'autoradio (ou de l'équipement audio) le cas échéant. La position du microphone 11 par rapport à la source de bruit ambiant est importante afin d'optimiser l'efficacité du dispositif. En effet, le microphone doit être placé de manière à ne capturer le signal utile qu'avec une faible amplitude par rapport au bruit. Dans une voiture, par exemple, il est préférable de placer le microphone près du moteur et loin de la source de signal utile (utilisateur ou équipement audio) afin que le signal utile ne soit pas traité comme du bruit ambiant. Dans le second exemple d'application de l'invention, le bruit ambiant ne comprend que le bruit du moteur.

La figure 2 illustre un mode de réalisation préféré de l'invention particulièrement avantageux pour une application en radio téléphonie numérique de type «mains libres» où le signal utile est constitué par le signal téléphonique numérique prélevé en sortie du téléphone, avant amplification du signal vers une sortie de haut-parleur. L'ensemble du dispositif peut par exemple être intégré dans un kit de téléphonie automobile muni de la fonction «mains libres». Pour un signal utile S analogique, il est nécessaire de prévoir des moyens numérisation dans le bloc de filtrage portant la référence 14 sur la figure 1 ou 25 sur la figure 2, pour numériser le signal utile avant de lui appliquer le filtre numérique.

Selon le mode de réalisation préféré, il est prévu une boucle d'annulation d'écho pour minimiser l'influence du signal utile sur une estimation du bruit ambiant. En effet, le système «mains libres» amplifie le signal de parole reçu de sorte que celui-ci est capturé par le microphone en même temps que le signal de parole de l'utilisateur local. Le phénomène étant en outre amplifié dans un lieu confiné tel qu'un habitacle automobile, l'interlocuteur distant est susceptible d'entendre un écho de sa voix. Selon le mode de réalisation préféré de l'invention, une boucle d'annulation d'écho est utilisée pour supprimer la contribution du signal de parole amplifié de l'interlocuteur distant, au bruit ambiant généré principalement par le moteur et éventuellement par un equipement audio de type autoradio. La boucle d'annulation d'écho, intégrée dans la plupart des équipements automobiles «mains libres» est ainsi avantageusement réutilisée.

Le bruit ambiant mélangé au signal de parole amplifié de l'interlocuteur est capturé par le microphone 21 et est numérisé par le bloc d'acquisition et de conversion 22. Le signal numérique résultant de cette conversion est fourni en entrée d'un bloc d'annulation d'écho 23 de type classique, pour restituer une estimation numérique de bruit correspondant au bruit ambiant débarrassé des phénomènes d'écho provenant, entre autre, du signal utile. Des techniques de suppression de bruit sont décrites dans la revue IEEE Signal Processing volume 8 numéro 4, pages 387 à 400 de juillet 85, dans l'article de Peter Vary «noise suppression by spectral magnitude estimation - mechanism and theoretical limit». L'estimation numérique de bruit est ensuite fournie en entrée d'un dispositif d'extraction d'enveloppe 24, comportant par exemple un analyseur prédictif de type LPC (de l'anglais Linear Predictive Coding) pour déterminer l'enveloppe spectrale du signal de bruit (ou son estimation) et en extraire des paramètres d'enveloppe LPC caractéristiques de l'enveloppe spectrale du signal des paramètres, notés $a_i$. Un lissage temporel est ensuite effectué sur les paramètres $a_i$, par exemple toutes les 10 trames de données ou encore toutes les 200 millisecondes environ, par un organe de calcul approprié de façon à compenser d'éventuelles variations brusques dans les valeurs de $a_i$ fournies. L'organe de calcul obtient des paramètres moyennés ou paramètres de contrôle $c_i$ injectés dans un bloc de filtrage numérique 25 pour paramétrer un filtre numérique de longueur m destiné à filtrer le signal utile S.

Par exemple, l'équation du filtre peut s'écrire :

$$\alpha + (1-\alpha) * \frac{\sum\limits_{i=0}^{m} c_i (z/\gamma_1)^{-i}}{\sum\limits_{i=0}^{m} c_i (z/\gamma_2)^{-i}}$$

où :

- $\alpha$ est un coefficient réel compris entre 0 et 1 permettant de contrôler le poids du filtre,
- le symbole * indique une multiplication,
- $\gamma 1$ et $\gamma 2$ sont des coefficients de pondération indiquant respectivement la distance de la

racine des polynômes

$$\sum\limits_{i=0}^{m} c_i (z/\gamma_1)^{-i} \quad et \quad \sum\limits_{i=0}^{m} c_i (z/\gamma_2)^{-i}$$

au cercle unité, avec $0<\gamma 1 <\gamma 2 <1$.

Le signal filtré est ensuite amplifié et converti en un signal analogique par un bloc d'amplification et de conversion 26 pour être envoyé en sortie vers un haut-parleur 27.

Selon une variante de réalisation de l'invention, on peut utiliser à la place du filtre numérique utilisé dans le bloc de filtrage 25, un égaliseur variable dans le temps piloté par l'estimation d'enveloppe du bruit fournie par le bloc d'extraction d'enveloppe. Cela revient à renforcer les bandes de fréquences du signal utile qui correspondent à des bandes de fréquences du signal de bruit ayant une énergie supérieure à une valeur donnée. Des méthodes d'analyse LPC ainsi que des techniques de paramétrage de filtres sont décrits en détails dans l'ouvrage de Kleijn et al 〈〈speech coding and synthesis〉〉 édité chez Elsevier, elles ne seront donc pas développées ici.

La figure 3 est un schéma bloc représentant un exemple de récepteur selon l'invention: un téléphone radio numérique. Il comprend une chaîne d'émission constituée d'un microphone 31, d'un convertisseur analogique / numérique A/D, d'un codeur de parole 32, d'un codeur de canal 33 et d'un module dédié à la partie radio fréquence 34 relié à un duplexeur 35 couplé à une antenne d'émission / réception 36. Il comprend également une chaîne de réception constituée de l'antenne 36, du duplexeur 35, du module radio 34, d'un décodeur de canal 37, d'un décodeur de parole 38, d'un convertisseur numérique / analogique D/A et d'un haut-parleur 39. Les modules de codage et décodage 32, 33, 37 et 38 peuvent être réalisés par un processeur de signal numérique DSP.

Selon un mode de réalisation avantageux, le codeur de parole 32 comporte des moyens d'extraction d'enveloppe, par exemple des moyens d'analyse LPC du signal de parole téléphonique ou signal utile. Ces moyens sont prévus notamment par les normes de radiotéléphonie numériques de type GSM. Les résultats de l'analyse LPC sont communiqués au décodeur de parole 38 qui comprend un bloc de post-filtrage muni d'un filtre numérique à coefficients paramétrables pour filtrer le signal reçu selon un dispositif tel que décrit à la figure 2. Le signal modifié est alors envoyé sur une sortie de haut-parleur.

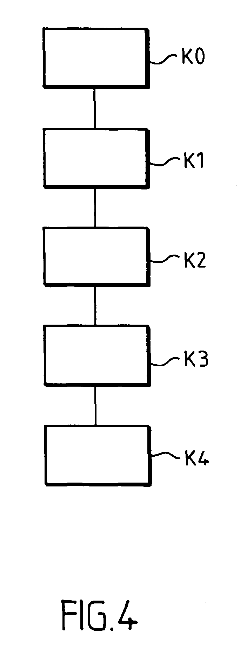

La figure 4 illustre un procédé de réception comportant un procédé de filtrage selon l'invention et réalisé par un récepteur tel que représenté à la figure 3. Il comprend

- une étape d'acquisition K0 pour prélever le bruit ambiant à l'aide de capteurs sonores, notamment le microphone 31,
- une étape d'analyse spectrale K1 réalisée par exemple par le codeur de parole 32 et / ou par le décodeur de parole 38, pour extraire une estimation d'enveloppe spectrale du signal de bruit prélevé et pour en déduire des paramètres d'enveloppe,
- une étape de calcul de moyenne temporelle K2 entre les paramètres d'enveloppe pour obtenir des paramètres moyennés, ou paramètres de contrôle,
- une étape de paramétrage K3 pour paramétrer un filtre numérique à l'aide des paramètres de contrôle calculés et
- une étape de filtrage K4 pour filtrer le signal utile à l'aide du filtre numérique ainsi paramétré.

Ainsi ont été décrits et illustrés à l'aide d'exemples, un dispositif de traitement audio, un récepteur et un procédé pour améliorer le confort acoustique d'un utilisateur en présence de bruit ambiant. Bien entendu, des variantes de réalisation pourront être apportées sans sortir du cadre de l'invention, notamment en ce qui concerne la structure des filtres utilisés ainsi que les techniques d'acquisition du bruit ambiant ou d'extraction d'enveloppe.

**Revendications**

1. Dispositif de traitement audio destiné à filtrer un signal, dit signal utile, ayant une enveloppe spectrale située dans la bande audio et à le restituer en présence de bruit ambiant, caractérisé en ce qu'il comporte des moyens de prélèvement du bruit ambiant, des moyens d'extraction d'enveloppe spectrale pour extraire des paramètres d'enveloppe du bruit ambiant prélevé et des moyens de filtrage numériques contrôlés par lesdits paramètres d'enveloppe pour modifier l'enveloppe spectrale du signal utile à restituer, les moyens de filtrage comportant un filtre numérique à coefficients paramétrables et coopérant avec lesdits moyens d'extraction d'enveloppe pour paramétrer le filtre à l'aide des paramètres d'enveloppe.

2. Dispositif selon la revendication 1, caractérisé en ce qu'il comporte une boucle d'annulation d'écho contrôlée par le signal de sortie du filtre numérique pour supprimer l'écho acoustique existant dans le bruit ambiant prélevé et pour fournir auxdits moyens d'extraction une estimation du bruit ambiant.

3. Dispositif selon la revendication 1, caractérisé en ce que lesdits moyens d'extraction d'enveloppe comprennent un analyseur prédictif de type LPC pour fournir des paramètres d'enveloppe LPC audit filtre numérique.

4. Dispositif selon la revendication 1, caractérisé en ce que les moyens de filtrage comportent des moyens de calcul pour effectuer une moyenne temporelle entre les paramètres d'enveloppe fournis par lesdits moyens d'extraction.

5. Récepteur susceptible de recevoir un signal, dit signal utile ayant une enveloppe spectrale située dans la bande audio, caractérisé en ce qu'il comporte un dispositif de traitement audio selon la revendication 1.

6. Récepteur selon la revendication 5, caractérisé en ce qu'il comporte des moyens d'antenne pour recevoir un signal radioélectrique, couplés à des moyens de récupération d'un signal audio en bande de base pour récupérer ledit signal utile à partir dudit signal radio reçu.

7. Appareil téléphonique comportant un récepteur selon la revendication 6.

8. Procédé de filtrage pour filtrer un signal audio, dit signal utile, et le restituer en présence de bruit ambiant, caractérisé en ce qu'il comporte les étapes suivantes:

   • une étape d'acquisition et d'analyse spectrale pour prélever le bruit ambiant, en extraire une estimation d'enveloppe spectrale et en déduire des paramètres d'enveloppe,
   • une étape de calcul de moyenne temporelle entre les paramètres d'enveloppe pour obtenir des paramètres moyennés, dits paramètres de contrôle,
   • une étape de paramétrage pour paramétrer un filtre numérique à l'aide desdits paramètres de contrôle et
   • une étape de filtrage du signal utile à l'aide dudit filtre numérique.

9. Procédé de réception pour recevoir un signal fréquentiel, dit signal utile, ayant une enveloppe spectrale située dans la bande audio, comportant un procédé de filtrage selon la revendication 8, pour modifier l'enveloppe spectrale du signal utile avant de le restituer en présence de bruit ambiant.

FIG.1

FIG. 2

FIG. 3

K0

K1

K2

K3

K4

FIG.4

**Office européen des brevets**

# RAPPORT DE RECHERCHE EUROPEENNE

Numéro de la demande

EP 99 20 3486

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | DE 34 26 068 A (BLAUPUNKT-WERKE) 11 avril 1985 (1985-04-11) | 1,3,5,6 | H04R3/00 |
| A | * page 8, ligne 4-9 * <br> * page 10, ligne 17 - page 11, ligne 17 * <br> * page 14, ligne 3 - page 18, ligne 2 * <br> * page 19, ligne 20 - page 24, ligne 17 * | 7-9 | |
| Y | PATENT ABSTRACTS OF JAPAN vol. 98, no. 2, 30 janvier 1998 (1998-01-30) & JP 09 258795 A (NTT), 3 octobre 1997 (1997-10-03) | 1,3,5,6 | |
| A | * abrégé * | 4,8,9 | |
| A | PATENT ABSTRACTS OF JAPAN vol. 95, no. 7, 31 août 1995 (1995-08-31) & JP 07 111527 A (HITACHI), 25 avril 1995 (1995-04-25) * abrégé * | 1 | |
| A | EP 0 843 455 A (ALCATEL ALSTHOM) 20 mai 1998 (1998-05-20) * page 2, ligne 3-7 * <br> * page 2, ligne 31 - page 3, ligne 5 * <br> * page 4, ligne 31 - page 8, ligne 34 * | 1,2,4,5, 8 | **DOMAINES TECHNIQUES RECHERCHES (Int.Cl.7)** <br><br> H04R <br> H03G <br> H04M <br> G10L |
| A | US 5 425 127 A (YATO ET AL.) 13 juin 1995 (1995-06-13) * figure 1 * <br> * colonne 1, ligne 58-68 * <br> * colonne 2, ligne 45 - colonne 3, ligne 66 * | 1,3,4,8 | |

-/--

Le présent rapport a été établi pour toutes les revendications

| Lieu de la recherche | Date d'achèvement de la recherche | Examinateur |
|---|---|---|
| LA HAYE | 15 février 2000 | Zanti, P |

Office européen
des brevets

**RAPPORT DE RECHERCHE EUROPEENNE**

Numéro de la demande

EP 99 20 3486

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | WO 82 02306 A (MOTOROLA)<br>8 juillet 1982 (1982-07-08)<br>* page 1, ligne 1-4 *<br>* page 2, ligne 22-25 *<br>* page 7, ligne 9-30 *<br>* page 8, ligne 27 - page 11, ligne 7 * | 1,5-7 | |
| | | | **DOMAINES TECHNIQUES RECHERCHES (Int.Cl.7)** |

Le présent rapport a été établi pour toutes les revendications

| Lieu de la recherche | Date d'achèvement de la recherche | Examinateur |
|---|---|---|
| LA HAYE | 15 février 2000 | Zanti, P |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
 
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 99 20 3486

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-02-2000

| Document brevet cité au rapport de recherche | | Date de publication | Membre(s) de la famille de brevet(s) | | Date de publication |
|---|---|---|---|---|---|
| DE 3426068 | A | 11-04-1985 | US | 4628526 A | 09-12-1986 |
| | | | AT | 42655 T | 15-05-1989 |
| | | | EP | 0141129 A | 15-05-1985 |
| | | | JP | 60106216 A | 11-06-1985 |
| JP 09258795 | A | 03-10-1997 | AUCUN | | |
| JP 07111527 | A | 25-04-1995 | AUCUN | | |
| EP 843455 | A | 20-05-1998 | DE | 19647276 A | 20-05-1998 |
| | | | JP | 10164687 A | 19-06-1998 |
| US 5425127 | A | 13-06-1995 | JP | 4369698 A | 22-12-1992 |
| WO 8202306 | A | 08-07-1982 | US | 4378603 A | 29-03-1983 |
| | | | AR | 228168 A | 31-01-1983 |
| | | | AU | 543431 B | 18-04-1985 |
| | | | AU | 7893981 A | 20-07-1982 |
| | | | BR | 8108933 A | 30-11-1982 |
| | | | CA | 1173910 A | 04-09-1984 |
| | | | DE | 3176476 A | 05-11-1987 |
| | | | DK | 344182 A,B, | 02-08-1982 |
| | | | EP | 0067173 A | 22-12-1982 |
| | | | FI | 822898 A,B, | 20-08-1982 |
| | | | HK | 13890 A | 02-03-1990 |
| | | | JP | 4032576 B | 29-05-1992 |
| | | | JP | 57502032 T | 11-11-1982 |
| | | | MX | 150487 A | 14-05-1984 |
| | | | NO | 822869 A | 12-01-1983 |

EPO FORM P0460

Pour tout renseignement concernant cette annexe : voir Journal Officiel de l'Office européen des brevets, No.12/82